Europäisches Patentamt

European Patent Office

Office européen des brevets

(19)

(11) Publication number: **0 173 175**
**B1**

(12) **EUROPEAN PATENT SPECIFICATION**

(45) Date of publication of patent specification: **14.03.90**

(51) Int. Cl.⁵: **H 02 M 7/757**

(21) Application number: **85110235.0**

(22) Date of filing: **15.08.85**

(54) **Method for controlling a static converter in an HVDC power transmission system and a converter with control means for carrying out the method.**

(30) Priority: **24.08.84 SE 8404218**

(43) Date of publication of application:
**05.03.86 Bulletin 86/10**

(45) Publication of the grant of the patent:
**14.03.90 Bulletin 90/11**

(84) Designated Contracting States:
**AT CH DE FR GB LI**

(56) References cited:
FR-A-2 077 042
GB-A- 985 674
GB-A-2 002 974
US-A-3 644 820
US-A-4 056 768
J. Arrillaga: "High voltage direct current transmission", 1983, Peter Peregrinus, pages 88 to 94
IEE TRANSACTIONS ON POWER APPARATUS AND SYSTEMS, vol. 87, no. 3, March 1968, pages 859-865, GB; J.D. AINSWORTH: "The phase-locked oscillator - A new control system for controlled static convertors"

(73) Proprietor: **ASEA AB**
**S-721 83 Västeras (SE)**

(72) Inventor: **Ljungqvist, Rolf, Dipl.-Ing.**
**Rotorvägen 33**
**S-771 00 Ludvika (SE)**
Inventor: **Lübeck, Sven Bertil, Dipl.-Ing.**
**Tjärngatan 17**
**S-771 00 Ludvika (SE)**

(74) Representative: **Boecker, Joachim, Dr.-Ing.**
**Rathenauplatz 2-8**
**D-6000 Frankfurt a.M. 1 (DE)**

(56) References cited:
J. Arrillaga: "High voltage direct current transmission", 1983, Peter Perigrinus, pages 88 to 94
IEE TRANSACTIONS ON POWER APPARATUS AND SYSTEMS, vol. 87, no. 3, March 1968, pages 859-865, GB; J.D. AINSWORTH: "The phase-locked oscillator - A new control system for controlled static convertors"

## Description

The invention relates to a method for controlling a static converter in an HVDC power transmission system according to the precharacterising part of Claim 1. The invention also relates to a static converter with control means for carrying out the method. When operating as inverter at a direct current which is smaller than the current order, the converter is controlled so that its current-voltage characteristic has a positive gradient.

Converters of the above-mentioned kind are previously known from the GB—B—1 300 226 or the US—A—3 644 820. This document describes an HVDC transmission system in which the characteristic of the converter in the inverter station is modified within the region of the current margin by making the extinction angle ($\gamma$) current-dependent and increasing it beyond its minimum value ($\gamma_0$). The characteristic within the current margin region is given a positive gradient and in this way static stability under certain operating conditions is achieved. It has been shown, however, that this solution can give rise to instabilities in the operation of the converter and this is particularly true when the converter is connected to a weak alternating-voltage network. Despite the achieved static stability, natural oscillations may occur in the control system, resulting in a relatively large AC component being superimposed on the direct current of the system. In certain cases it has been possible to remedy these phenomena by making the alternating-voltage networks stiffer with the aid of rotational (synchronous condensers) or static equipment for reactive power compensation, but such solutions are very expensive.

Another converter of the above-mentioned kind is previously known from the book by Erich Uhlmann "Power Transmission by Direct Current" (Springer-Verlag, 1975), pages 132—133, Figure 9.6. In this document a method for increasing the stability is proposed which involves operating the converter in the inverter station, within the current margin region, with a constant control angle ($\alpha$), which gives the characteristic a slightly positive gradient within the current margin region. The attenuation of any oscillations which may arise is, however, weak when employing the Uhlmann method.

The invention aims at developing a method and a converter for carrying out the method which in a simple manner and at a negligibly low cost provide a stable inverter operation even if the converter is connected to a weak alternating-voltage network.

In order to achieve this aim the invention suggests a method according to the introductory part of Claim 1, which is characterized by the features of the characterizing part of Claim 1.

Further developments of this method are characterized by the features of the additional Claims 2 to 5.

A converter for carrying out the method according to the invention is characterized by the features of Claim 6.

Further developments of the converter are characterized by the features of the Claims 7 to 9.

In its method aspect, the invention comprises controlling an HVDC converter by measuring the direct current of the converter and comparing it with a current order after diminishing the latter by a so-called current margin value. The converter is controlled with a control angle which is dependent, on the one hand, on a component proportional to the difference obtained by the afore-mentioned comparison and, on the other hand, on a component corresponding to the time integral of said difference. In inverter operation and at a direct current lower than the current order, the converter is controlled so that its current-voltage characteristic has a positive gradient.

The invention will now be described in greater detail with reference to the accompanying drawings in which

Figure 1 shows an high-voltage direct current transmission system with a converter and associated control means according to the invention,

Figure 2 shows schematically a device for calculating the limiting value $\alpha_{max}$,

Figure 3 shows the current-voltage characteristic of one converter according to the invention,

Figure 4 shows the current-voltage characteristics of two parallel-working inverters according to the invention.

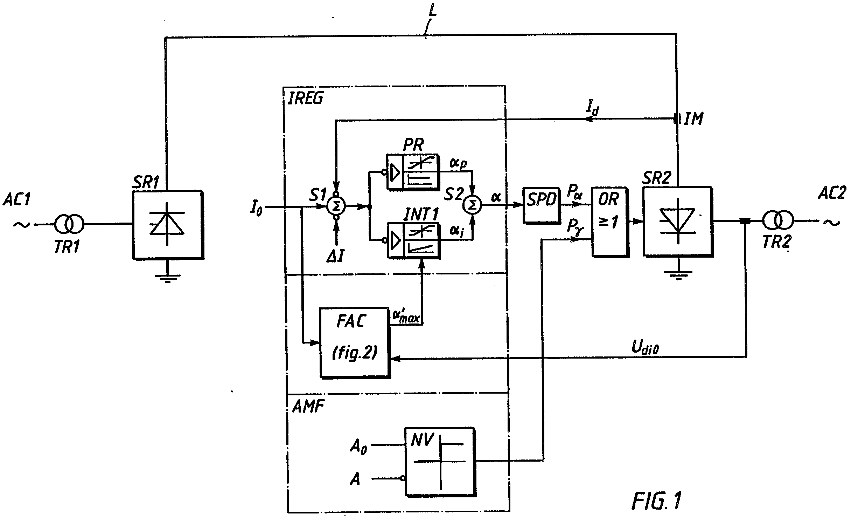

Figure 1 shows a HVDC power transmission system with assocated control equipment. The transmission system comprises a rectifier station and an inverter station, each including a converter SR1 and SR2, respectively, and a converter transformer TR1 and TR2, respectively. The converters are preferably line commutated and a 12-pulse type. The converters SR1 and SR2 are connected via DC transmission line L.

The two converters are identical and are provided with identical conventional control systems. The construction of the converters, and the design of their control systems, are in accordance with conventional and well-known principles, for example such as disclosed in the above-mentioned book by Uhlmann thus making their further description unnecessary.

The current regulators of the converters, however, are of novel design, and the control system of one of the converters, SR2, will now be described in detail.

The converter in each station must be able to operate as a rectifier or as an inverter to enable the transmission of power through line L to be reversed. In the following description, the converter SR1 will be assumed to be operating as a rectifier and the converter SR2 as an inverter.

The current regulator IREG of the converter SR2 is supplied with a current order signal $I_0$. This current order signal is common to both converters of the transmission system and is suitably obtained from a superordinate control system, for example for power or frequency control. The superordinate control system may be located in either of the two converter stations, and the current order signal $I_0$ is transmitted to the other station by means of, for example, a telecommunication link.

A signal $\Delta I$, the so-called current margin, is subtracted from the current order signal $I_0$ in a summation device S1. From a DC measurement device IM on the line L a signal $I_d$ is obtained which corresponds to the direct current flowing in the line. This signal $I_d$ is also subtracted from $I_0$ in the summation device S1. If the direct current signal $I_d$ of the converter deviates from the value obtained by the subtraction of the current margin $\Delta I$ from the current order signal $I_0$, an output signal from the summation device S1 is supplied to the two parts of the current regulator now to be described. If $I_0-I_d-\Delta I$ equals zero there is no output signal from the summation device S1.

In prior art systems, the current regulator normally consists of a single regulator with a proportional-integrating characteristic (PI-characteristic). According to the invention, the regulator is divided into two parts, a separate proportional regulator part PR and a separate integrating regulator part INT1. Both these parts are supplied with the output signal from the summation device S1. The proportional regulator part PR has an amplification factor k and supplies its output signal $\alpha_p$ to a summation device S2. The integrating regulator INT1 has a purely integrating charactersitic and also supplies its output signal $\alpha_i$ to the summation device S2. According to the invention, the integrating regulator part INT1 is provided with a limiting input, receiving a signal $\alpha'_{max}$ from a calculating circuit FAC. Therefore, the output signal of the integrating regulator part INT1 can never exceed the value $\alpha'_{max}$ supplied to the limiting input. The output signal $\alpha_i$ from the integrating part is supplied to the summation device S2, which yields a resulting output signal $\alpha=\alpha_p+\alpha_i$. The signal $\alpha$ constitutes the control angle order which is supplied, by the control system, to a control pulse device SPD of the converter. This device supplies, in a manner known per se, control or ignition pulses $P\alpha$ with a control angle of the ordered value $\alpha$. These pulses are supplied to an OR-gate OR. The second input of ths OR-gate is supplied with pulses $P\gamma$ from an extinction angle control circuit AMF.

The circuit AMF may be constructed, for example, in the manner described in an article by Forsell entitled "The Gotland DC Link: The Grid Control and Regulation Equipment" and published in Direct Current, Vol. 2, No. 5, June 1955; in Direct Current, Vol. 2, No. 7, Dec. 1955; in the GB—B—985,674; and in IEEE Transactions on Power Apparatus and Systems, Vol PAS-87, No. 3, March 1968, pp. 859—865.

In the manner described in the above-mentioned publications the voltage time integral A, which remains up to the zero passage of the commutating voltage and which is available for commutation, is continuously calculated. Further, a reference value $A_0$ is calculated which corresponds to the voltage time integral required for the commutation of the present direct current to be completed at a certain angle $\gamma_0$ before the zero passage of the commutating voltage. The angle $\gamma_0$ is the so-called extinction angle and has suitably a constant value in the range 15°—20°. During each period, the quantities $A_0$ and A are continuously compared in a level flip-flop NV. The quantity A decreases continuously with time and when it is equal to the reference quantity $A_0$, the level flip-flop NV delivers an output signal $P\gamma$.

The pulses $P\alpha$ and $P\gamma$ are thus both supplied to the OR-gate OR, which means that whichever of the two pulses arrives first at the OR-gate is supplied to the converter valve in question (SR2) rendering it conductive.

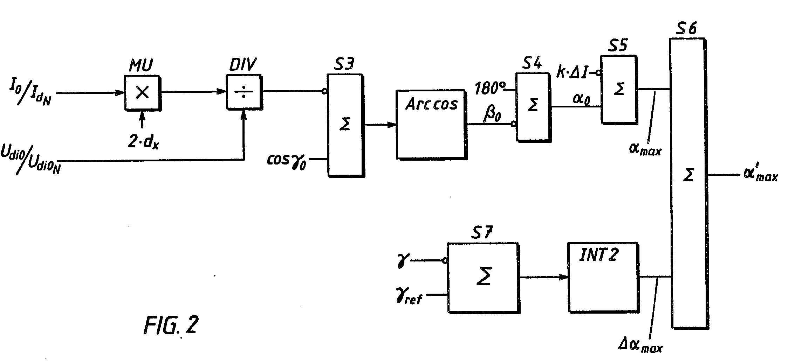

Figure 2 shows, in greater detail, one arrangement for the calculating circuit FAC in Figure 1 used to calculate the upper limit value $\alpha'_{max}$ to be fed to the integrating regulator part INT1. First the control angle $\alpha_0$ is calculated which, at a direct current equal to the ordered current $I_0$, gives a turn-off angle $\gamma=\gamma_0$. In accordance with known relationships, this control angle is obtained from the equations

$$\cos \beta_0 = \cos \gamma_0 - 2 \cdot d_x \cdot \frac{I_0}{I_{d_N}} \cdot \frac{U_{diO_N}}{U_{diO}}$$

$$\alpha_0 = 180° - \beta_0$$

In these relationships
$d_x$ is the impedance of the alternating voltage network
$I_{d_N}$ is the nominal current of the converter
$U_{diO}$ is the ideal direct voltage of the converter (open circuit voltage at $\alpha=0$)
$U_{diO_N}$ is the ideal direct voltage of the converter at nominal mains voltage.

The current order signal $I_0$, multiplied by a suitable scaling factor, is supplied in the form of the quantity $I_0/I_{d_N}$ to a multiplier MU, the second input of which is supplied with a quantity $2 \cdot d_x$. The output signal of the multiplier MU is supplied to one input of a dividing circuit DIV. To the second input of the dividing circuit there is supplied a quantity of $U_{diO}/U_{diO_N}$ which is obtained by measuring the amplitude of the voltage in the alternating voltage network connected to the converter and multiplying that amplitude by a suitable scaling factor. In a summation device S3, the output signal of the dividing circuit is subtracted from a constant value, corresponding to $\cos \gamma_0$. The output signal of the summation device S3 is supplied to a calculating circuit Arccos with arcuscosine (inverse cosine) function the output signal of which constitutes the angle $\beta_0$. In a summation device S4, the angle $\beta_0$ is subtracted from the constant value 180°, to give the angle $\alpha_0$. In a summation device S5, an amount $k \cdot \Delta I$ is subtracted from the angle $\alpha_0$, where k is the amplification

3

factor of the proportional regulator part PR in Figure 1 and $\Delta I$ is the current margin. Thus, the amount $k \cdot \Delta I$ corresponds to the output from the proportional regulator part PR in the case when the input signal to the proportional regulator part PR is equal to the current margin. In the presently described operational case the output signal $\alpha_{max}$ from the summation device S5 represents the limiting value $\alpha'_{max}$ for the output signal $\alpha_i$ of the integrating regulator part INT1, since it is presumed that the correction $\Delta\alpha$ is zero.

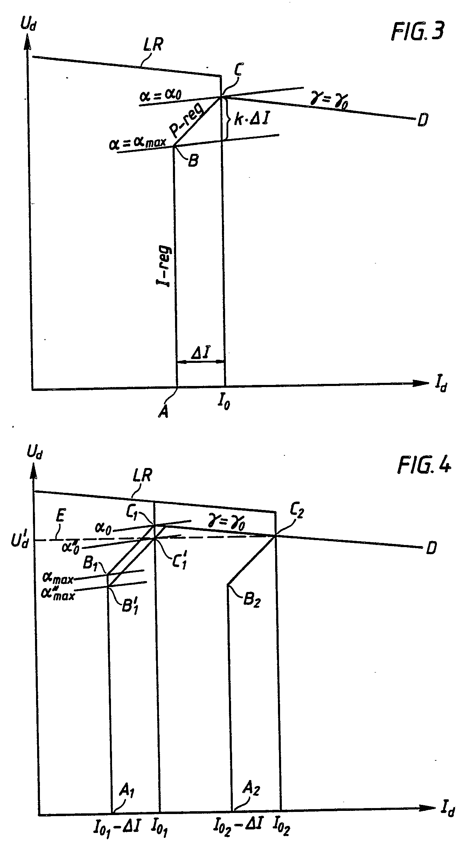

The current-voltage characteristic obtained from a static converter according to the invention is shown in Figure 3 (curve A—B—C—D). The vertical curve portion A—B is used for the conventional current control of the converter SR2 operating as an inverter. The two curves designated $\alpha=\alpha_0$ and $\alpha=\alpha_{max}$ constitute the direct voltage of the converter as a function of the current during operation with a constant control angle having, respectively, the values $\alpha_0$ and $\alpha_{max}$. When operating within the curve portion B—C, $\alpha$ is greater than $\alpha_{max}$ and the output signal of the integrating regulator part is, therefore, constant and equal to $\alpha_{max}$. Under these conditions, control is performed completely by the proportional regulator part PR. The greater the inclination of the curve portion B—C, the greater will be the attenuation of any natural oscillations. By suitable choice of the amplification factor k of the proportional regulator part PR, the inclination of the curve portion B—C can be adjusted so as to obtain a sufficient good damping and, therefore, stable operation even in the case of weak AC networks.

Therefore, as is clear from Figure 3, a considerably improved attenuation of the natural oscillations can be obtained, compared with the case of previously proposed converters operating with a constant control angle within the current margin region ($I_0-\Delta I<I_d<I_0$). The circuit according to the invention only makes use of the constant or substantially constant quantities $I_0$ and $U_{dio}$. Any feedback couplings, for example via the actual value of the current or the voltage, which may give rise to instabilities, do not exist in a circuit according to the invention.

Within the final curve portion C—D, the converter operates in a conventional manner with the extinction angle $\gamma=\gamma_0$, and it is now the extinction angle control circuit AMF in Figure 1 that determines the moment of ignition.

Unavoidable calculation and measurement faults will result in the limiting value $\alpha_{max}$ deviating from the ideal value which is determined by the mathematical relationship stated above. If too low a value of $\alpha_{max}$ is obtained, the converter SR2 will, during normal operation ($i_d=I_0$), operate with an extinction angle which exceeds the value $\gamma_0$. This results in an unnecessarily high consumption of reactive power and, furthermore, an unnecessarily high generation of harmonic waves. On the other hand, if $\alpha_{max}$ is given too high a value, the extinction angle control circuit AMF in Figure 1 will determine the control angle within a part of the current margin region, which results in a risk of unstable operation. To eliminate the possibility of the above-mentioned faulty $\alpha_{max}$ values arising, a slow feedback can be provided, which is illustrated in Figure 2.

To a summation device S7 there are supplied, on the one hand—with a negative sign—a constant value $\gamma_{ref}$, which, for example, may be equal to $\gamma_0$, and, on the other hand, a signal which corresponds to the present value of the extinction angle $\gamma$. The difference between these signals is supplied to an integrator INT2, which has a large time constant, for example of the order of magnitude of one or a few minutes. The output signal $\Delta\alpha_{max}$ of the integrator is supplied to a summation device S6, to which is also supplied the signal $\alpha_{max}$. In the equilibrium state, the output signal $\Delta\alpha_{max}$ of the integrator will assume such a value that $\gamma=\gamma_{ref}$. Thus, the signal $\Delta\alpha_{max}$ will correct any faults in the signal $\alpha_{max}$ obtained from the summation device S5, and the output signal $\alpha'_{max}$ from the summation device S6, which is supplied to the integrating regulator part INT1 as a limiting signal, will correspond closely to the desired value.

The method described above can be used when operating with an extinction angle which, in normal operation, somewhat exceeds the smallest permissible value $\gamma_0$. If, in normal operation, it is desired to operate with the smallest permissible extinction angel $\gamma_0$, it is possible to use, in place of or in addition to, a method which detects when ignition takes place via the extinction angle control circuit AMF, and which delivers a suitable input signal to the integrator INT2. Via the output signal $\Delta\alpha_{max}$ of the integrator INT2, the limiting value $\alpha'_{max}$ will thereby continually be corrected and will be maintained at such a value that, in the equilibrium state, the extinction angle will have its smallest permissible value $\gamma_0$.

In prior art converters, obtaining a stable parallel operation of two or more inverters constitutes a major problem. It has been established that a control method and a control equipment according to the invention provide good stability also for this operating case. To obtain the desired current distribution between the parallel-operating inverters, as shown in Figure 4, the limiting value $\alpha_{max}$ may be modified for the converter which operates with the lowest current order.

Assume the two parallel-operating inverters have the current order signals $I_{01}$ and $I_{02}$. When controlling the converters according to the principles described above, the converter with the current order signal $I_{01}$ operates with the characteristic $A_1$—$B_1$—$C_1$—D and the second converter operates with the characteristic $A_2$—$B_2$—$C_2$—D. The second converter determines the operating voltage (line voltage), which implies that the converter with the lower current order signal $I_{01}$ will receive a current lower than its current order signal and that the converter with the current order signal $I_{02}$ will receive a current higher than its current order signal. To avoid such undesired uneven distribution of the load current, the calculation of the limiting value $\alpha_{max}$ for the integrating part of the current regulator may be modified so that instead of $\alpha_0$ a value $\alpha''_0$ is calculated according to

$$-\cos \alpha_0'' = -\cos\alpha_0 - \frac{I_{02}-I_{01}}{I_{d_N}} \cdot \frac{U_{diO_N}}{U_{diO}}(d_x-d_r)$$

where $d_x$ is the inductive component of the impedance on the alternating voltage side of the converter and $d_r$ is the resistive component of the impedance on the alternating voltage side of the converter. Thereafter, the modified limiting value $\alpha''_{max}$ is calculated according to $\alpha''_{max}=\alpha''_0-k \cdot \Delta I$. The thus modified characteristic is represented by the curve $A_1$—$B_1'$—$C_1'$—D. The working voltage $U'_d$ of the two converters is determined by the converter with the higher current order signal $I_{02}$ and is indicated in Figure 4 by the dashed horizontal line E. The operating points for the two converters are $C_1'$ and $C_2$, that is, both converters will operate with currents equal to the ordered current values $I_{01}$ and $I_{02}$.

The formula set out above is valid provided that the same ideal direct voltage ($U_{diO}$) prevails in the two parallel-operating inverters, that is, that the inverters are connected to the same alternating voltage network and have synchronized tap changers. If the ideal direct voltages of the inverters differ from one another, the above noted formula will have to be modified so as to make allowance for this fact.

The control equipment for a converter according to the invention may be in a conventional manner, completely of analog type, completely of digital type, or of a combination of these two types. When using digital technics, the circuits may either consist of specially built circuits or of appropriately programmed microcomputer circuits or corresponding units. When using programmed digital circuits it may be impossible physically to separate the proportional and integrating parts of the current regulator from one another. It may then be more suitable to designate the current regulator as being provided with a proportional partial function, and an integrating partial function with a limited output signal.

In the foregoing it has been described how the limiting value for the integrating regulator part is determined by subtracting from the calculated value $\alpha_0$ a quantity $k \cdot \Delta I$ which consists of the output of the proportional regulator part for a current deviation equal to the current margin. The output signal $\alpha$ of the current regulator is then obtained by summing the output signals $\alpha_p$ and $\alpha_i$ from the proportional and the integrating regulator part. According to an alternative embodiment of the invention, which gives exactly the same function and characteristic of the converter, the current margin can be subtracted only from the input signal to the integral regulator part but not from the input signal of the proportional regulator part. In this way, the output signal of the proportional regulator part becomes zero when $I_d=I_0$, whereby $\alpha_{max}=\alpha_0$. The proportional part will then have a negative sign for $I_d<I_0$.

The embodiments described can be modified in many ways within the scope of the appended claims.

## Claims

1. Method for controlling a static converter in an HVDC power transmission system, said converter being supplied with a current order signal ($I_o$) for controlling its direct current, which method includes measuring the direct current ($I_d$) of the converter,
determining the difference ($I_o-I_d$) between the measured current ($I_d$) and the current order signal ($I_o$),
controlling the converter with a control angle ($\alpha$) delivered by a current regulator which is supplied with said difference, the current regulator delivering an output signal ($\alpha$) comprising a proportional component ($\alpha_p$) and an integral component ($\alpha_i$),
whereby said output signal ($\alpha$) causes the converter to operate with a positive gradient current-voltage characteristic when the direct current falls within the area determined by the current order signal ($I_o$) and the current order signal ($I_o$) diminished by the current margin value ($\Delta I$), characterized in
that the output signal ($\alpha$) of the current regulator is composed of two independent components one of which is a linear function of the input signal of a proportional functional branch (PR) of the current regulator (IREG) while the other component is delivered from an integrating functional branch (INT1) of the current regulator,
that the output signal ($\alpha_i$) of the integrating functional branch is limited to a limit value ($\alpha'_{max}$) which is continuously calculated in dependence of the current order signal ($I_o$) and the ideal direct voltage ($U_{diO}$) of the converter in such a way that the output signal of the current regulator is determined by

$$\alpha=\alpha_o-k(I_o-I_d)$$

whereby $\alpha_o$ is the control angle which, for the prevailing current order, causes the extinction of the valve at a predetermined minimum value ($\gamma_o$) of the extinction angle
and k is the amplification factor of the proportional functional branch of the current regulator
and that the slope of said positive gradient current-voltage characteristic within said area can be set by choosing the amplification factor k of the proportional functional branch of the current regulator.

2. Method according to Claim 1, characterized in that both, the input of the proportional functional branch (PR) and the input of the integrating functional branch (INT1) of the current regulator are supplied with said difference ($I_o-I_d$) decreased by a current margin value ($\Delta I$).

3. Method according to Claim 1, characterized in that the input of the proportional functional branch (PR) is fed with said difference ($I_o-I_d$) and that the input of the integrating functional branch (INT1) of the current regulator is supplied with said difference ($I_o-I_d$) decreased by a current margin value ($\Delta I$).

4. Method according to Claim 2, characterized in that said limit value ($\alpha'_{max}$) to the integrating functional branch of the current regulator is calculated by calculating the control angle, at which, at a current equal to the current order, the extinction angle of the converter has a predetermined minimum value, whereafter an amount is subtracted from said control angle corresponding to the magnitude of the proportional component at a current equal to the current order.

5. Method according to Claim 3, characterized in that said limit value ($\alpha'_{max}$) to the integrating functional branch of the current regulator is calculated by calculating the control angle, at which, at a current equal to the current order, the extinction angle of the converter has a predetermined minimum value.

6. Method according to any of the preceding Claims for a plurality of parallel connected converters in the inverter station each converter having a different current order signal ($I_{01}$ and $I_{02}$, respectively) characterized in that in each of the converters which has a lower current order signal than the one with the highest current order signal, the control angle component corresponding to the time integral of the said difference is limited in dependence on the difference between the highest current order signal and the current order signal of the converter to an amount which corresponds to the control angle which, when the current of the converter is equal to its current order, gives the converter a voltage which is equal to the voltage of the converter with the highest current order, when the current of the latter converter is equal to its current order.

7. Static converter in an HVDC power transmission system provided with control means for carrying out the method according to any of the preceding Claims, said converter including

a current regulator of proportional-integrating character,

means to control the control angle of the converter in dependence on the difference ($I_o-I_d$) between on the one hand, the current order signal ($I_o$) and, on the other hand, the measured direct current

means to impart a positive inclination to the current-voltage characteristic of the converter, when operating as inverter within the area determined by the current order signal ($I_o$) and the current order signal ($I_o$) diminished by the current margin value ($\Delta I$), characterized in

that the current regulator is divided into two functional branches or parts, a proportional functional regulator part (PR) and an integrating functional regulating part (INT),

that means are provided to limit the output signal ($\alpha_i$) of said functional integrating part,

that calculating means (FAC) are provided adapted to calculate the limit value ($\alpha'_{max}$) for the output quantity from the functional integrating regulator part (INT1) of the current regulator,

that a summation device (S2) is arranged adapted to sum up the output quantities from the proportional and the integrating functional regulator parts of the current regulator,

and that said summation device (S2) is connected to the circuit controlling the converter.

8. Converter according to Claim 7, characterized in that means are provided to connect said difference ($I_o-I_d$), decreased by a current margin value ($\Delta I$), to the input side of both the proportional functional branch (PR) and the integrating functional branch (INT1) of the current regulator.

9. Converter according to Claim 7, characterized in that the means are provided to connect said difference ($I_o-I_d$), decreased by a current margin value ($\Delta I$), to the input side of the integrating functional branch (INT1) for the current regulator and that means are provided to connect said difference ($I_o-I_d$) to the input side of the proportional functional branch (PR) of the current regulator.

10. Converter according to Claim 8, characterized in that means are provided to calculate the control angle, at which, at a current equal to the current order, the extinction angle of the converter has a predetermined minimum value, that means are provided to subtract from the calculated control angle an amount corresponding to the magnitude of the proportional component at a current equal to the current order and that means are provided to limit the output of the integrating part of the current regulator either directly according to the afore-mentioned calculated value or after further processing of this calculated value.

**Patentansprüche**

1. Verfahren zur Steuerung eines statischen Stromrichters in einer Hochspannungs-Gleichstrom-Übertragungsanlage (HGÜ-Übertragungsanlage), wobei der Stromrichter mit einem Stromsollwert ($I_o$) zur Steuerung seines Gleichstromes gespeist wird und das Verfahren folgende Schritte unfaßt:

Messung des Gleichstroms ($I_d$) des Stromrichters,

Bestimmung der Differenz ($I_o-I_d$) zwischen dem gemessenen Gleichstrom ($I_d$) und dem Stromsollwert ($I_o$),

Steuerung des Stromrichters mit einem Steuerwinkel ($\alpha$), der von einem Stromregler geliefert wird, dem die genannte Differenz zugeführt wird, wobei der Stromregler ein Ausgangssignal ($\alpha$) liefert, welches eine proportionale Komponente ($\alpha_p$) und eine integrale Komponente ($\alpha_i$) hat,

wobei das genannte Ausgangssignal ($\alpha$) den Stromrichter veranlaßt, auf einer Strom-Spannungskennlinie mit positiver Steigung zu arbeiten, wenn der Gleichstrom innerhalb des Bereiches liegt, der durch den

Stromsollwert ($I_o$) und dem Stromsollwert ($I_o$) vermindert um das Strommarginal ($\Delta I$) bestimmt wird, dadurch gekennzeichnet,

daß das Ausgangssignal ($\alpha$) des Stromreglers aus zwei unabhängigen Komponenten zusammengesetzt ist, von denen die eine eine lineare Funktion des Eingangssignals eines proportional arbeitenden Zweiges (PR) des Stromreglers (IREG) ist, während die andere Komponente von einem integral arbeitenden Zweig (INT1) des Stromreglers geliefert wird,

daß das Ausgangssignal ($\alpha_i$) des integral arbeitenden Zweiges auf einen Begrenzungswert ($\alpha'_{max}$) begrenzt wird, welcher kontinuierlich in Abhängigkeit des Stromsollwerts ($I_o$) und der idealen Gleichspannung ($U_{dio}$) des Stromrichters in der Weise berechnet wird, daß das Ausgangssignal des Stromreglers bestimmt wird durch

$$\alpha = \alpha_o - k(I_o - I_d),$$

wobei $\alpha_o$ der Steuerwinkel ist, der für den herrschenden Stromsollwert das Verlöschen des Ventils bei einem vorgegebenen Mindestwert ($\gamma_o$) des Löschwinkels herbeiführt

und k der Verstärungsfaktor des proportional arbeitenden Zweiges des Stromreglers ist

und daß die Steilheit der mit positiver Steigung verlaufenden Strom-Spannungskennlinie in dem genannten Bereich durch die Wahl des Verstärungsfaktors k des proportional arbeitenden Zweiges des Stromreglers eingestellt werden kann.

2. Verfahren nach Anspruch 1, dadurch gekennzeichnet, daß sowohl der Eingang des proportional arbeitenden Zweiges (PR) als auch der Eingang des integral arbeitenden Zweiges (INT1) des Stromreglers mit der genannten Differenz ($I_o - I_d$) vermindert um den Strommarginalwert ($\Delta I$) beaufschlagt wird.

3. Verfahren nach Anspruch 1, dadurch gekennzeichnet, daß der Eingang des proportional arbeitenden Zweiges (PR) mit der genannten Differenz ($I_o - I_d$) beaufschlagt wird und daß der Eingang des integral arbeitenden Zweiges (INT1) des Stromreglers mit der genannten Differenz ($I_o - I_d$) vermindert um den Strommarginalwert ($\Delta I$) beaufschlagt wird.

4. Verfahren nach Anspruch 2, dadurch gekennzeichnet, daß der genannte Begrenzungswert ($\alpha'_{max}$) für den integral arbeitenden Zweig des Stromreglers berechnet wird durch Berechnung des Steuerwinkels, bei welchem bei einem Strom in der Größe des Stromsollwertes der Löschwinkel des Stromrichters einen vorgegebenen Mindestwert hat, worauf von diesem Steuerwinkel ein Wert subtrahiert wird, welcher der Größe der proportionalen Komponente bei einem Strom in der Größe des Stromsollwertes entspricht.

5. Verfahren nach Anspruch 3, dadurch gekennzeichnet, daß der genannte Begrenzungswert ($\alpha'_{max}$) für den integral arbeitenden Zweig des Stromreglers durch Berechnung des Winkels berechnet wird, bei welchem bei einem Strom, der gleich dem Stromsollwert ist, der Löschwinkel des Stromrichters einen vorgegebenen Mindestwert hat.

6. Verfahren nach einem der vorhergehenden Ansprüche für eine Anzahl von parallel geschalteten Stromrichtern in der Wechselrichterstation, wobei jeder Stromrichter einen anderen Stromsollwert ($I_{o1}$ bzw. $I_{o2}$) erhält, dadurch gekennzeichnet, daß bei jedern Stromrichter mit einem kleineren Stromsollwert als der Stromrichter mit dem größten Stromsollwert die Steuerwinkelkomponente, die dem Zeitintegral der genannten Differenz entspricht, in Abhängigkeit der Differenz zwischen dem höchsten Stromsollwert und dem Stromsollwert des Stromrichters auf einen Wert begrenzt ist, welcher dem Steuerwinkel entspricht, der, wenn der Strom des Stromrichters gleich einem Stromsollwert ist, dem Stromrichter eine Spannung gibt, welche gleich der Spannung des Stromrichters mit dem größten Stromsollwert ist, wenn der Strom des letztgenannten Stromrichter gleich seinem Sollwert ist.

7. Statischer Stromrichter in einer Hochspannungs-Gleichstrom-Übertragungsanlage, die mit Steuereinrichtungen zur Ausführung des Verfahrens nach einem der vorhergehenden Ansprüche ausgerüstet ist, wobei zu dem Stromrichter gehören

ein Stromregler mit proportional-integraler Charakteristik,

Mittel zur Steuerung des Steuerwinkels des Stromrichters in Abhängigkeit der Differenz ($I_o - I_d$) zwischen dem Stromsollwert einerseits und dem gemessenen Gleichstrom andererseits,

Mittel um der Strom-Spannungscharakteristik des Stromrichters eine positive Steigung zu verleihen, wenn er als Wechselrichter in dem Bereich arbeitet, der durch den Stromsollwert ($I_o$) und den Stromsollwert ($I_o$) vermindert um den Strommarginalwert ($\Delta I$) definiert ist, dadurch gekennzeichnet,

daß der Stromregler in zwei funktionale Zweige oder Teile unterteilt ist, einen proportional arbeitenden Reglerteil (PR) und einen integral arbeitenden Reglerteil (INT),

daß Mittel zur Begrenzung des Ausgangssignals ($\alpha_i$) des genannten integral arbeitenden Teils vorhanden sind,

daß Berechnungsglieder (FAC) vorhanden sind, die imstande sind, den Begrenzungswert ($\alpha'_{max}$) für die Ausgangsgröße des integral arbeitenden Reglerteils (INT1) des Stromreglers zu berechnen,

daß ein Summierungsglied (S2) vorhanden ist, welches imstande ist, die Ausgangsgrößen des proportional und des integral arbeitenden Reglerteils des Stromreglers zu summieren,

und daß das genannte Summierungsglied (S2) an den Kreis angeschlossen ist, welcher den Stromrichter steuert.

8. Stromrichter nach Anspruch 7, dadurch gekennzeichnet, daß Mittel vorgesehen sind, um die genannte Differenz ($I_o - I_d$), vermindert um den Strommarginalwert ($\Delta I$), an den Eingang sowohl des .

proportional arbeitenden Zweiges (PR) als auch des integral arbeitenden Zweiges (INT1) des Stromreglers anzuschließen.

9. Stromrichter nach Anspruch 7, dadurch gekennzeichnet, daß Mittel vorgesehen sind, um die genannte Differenz ($I_o$–$I_d$), vermindert um den Strommarginalwert ($\Delta I$), an den Eingang des integral arbeitenden Zweiges (INT1) des Stromreglers anzuschließen, und das Mittel vorhanden sind, um die genannte Differenz ($I_o$–$I_d$) an den Eingang des proportional arbeitenden Zweiges (PR) des Stromreglers anzuschließen.

10. Stromrichter nach Anspruch 8, dadurch gekennzeichnet, daß Mittel vorhanden sind, denjenigen Steuerwinkel zu berechnen, bei welchem, wenn der Strom gleich dem Stromsollwert ist, der Löschwinkel des Stromrichters einen vorgegebenen Mindestwert hat, daß Mittel vorhanden sind, um von dem berechneten Steuerwinkel einen Betrag abzuziehen, der der Größe der proportionalen Komponente bei einem Strom, der gleich dem Sollwert ist, entspricht, und daß Mittel vorhanden sind, um die Ausgangsgröße des integrierenden Teils des Stromreglers zu begrenzen, und zwar entweder unmittelbar gemäß dem vorgenannten berechneten Wert oder nach weiterer Verarbeitung dieses berechneten Wertes.

**Revendications**

1. Procédé pour commander un convertisseur statique dans un système de transport d'énergie à haute tension et à courant continu, ce convertisseur recevant un signal d'ordre de courant ($I_0$) pour commander son courant continu, ce procédé comprenant:

la mesure du courant continu ($I_d$) du convertisseur,

la détermination de la différence ($I_0$–$I_d$) entre le courant mesuré ($I_d$) et le signal d'ordre de courant ($I_0$),

la commande du convertisseur avec un angle de commande ($\alpha$) qui est fourni par un régulateur de courant auquel la différence précitée est appliquée, le régulateur de courant fournissant un signal de sortie ($\alpha$) qui comprend une composante proportionnelle ($\alpha_p$) et une composante intégrale ($\alpha_i$),

grâce à quoi le signal de sortie précité ($\alpha$) fait fonctionner le convertisseur avec une caractéristique courant-tension présentant un gradient positif lorsque le courant continu tombe dans la plage qui est déterminée par le signal d'ordre de courant ($I_0$) et le signal d'ordre de courant ($I_0$) diminué de la valeur de marge de courant ($\Delta I$), caractérisé en ce que

le signal de sortie ($\alpha$) du régulateur de courant est constitué par deux composantes indépendantes dont l'une est une fonction linéaire du signal d'entrée d'une branche fonctionnelle proportionnelle (PR) du régulateur de courant (IREG), tandis que l'autre composante est fournie par une branche fonctionnelle intégratrice (INT1) du régulateur de courant,

le signal de sortie ($\alpha_i$) de la branche fonctionnelle intégratrice est limité à une valeur limite ($\alpha'_{max}$) qui est continuellement cacaluée sous la dépendance du signal d'ordre de courant ($I_0$) et de la tension continue idéale ($U_{di0}$) du convertisseur, d'une manière telle que le signal de sortie du régulateur de courant soit déterminé par:

$$\alpha=\alpha_0-k(I_0-L_d)$$

en désignant par $\alpha_0$, l'angle de commande qui, pour l'ordre de courant en vigueur, provoque l'extinction de l'élément de commutation à une valeur minimale prédéterminée ($\gamma_0$) de l'angle d'extinction, et par k le facteur d'amplification de la branche fonctionnelle proportionnelle du régulateur de courant,

et la pente de la caractéristique courant-tension à gradient positif, dans la plage précitée, peut être fixée en choisissant le facteur d'amplification k de la branche fonctionnelle proportionnelle du régulateur de courant.

2. Procédé selon la revendication 1, caractérisé en ce que aussi bien l'entrée de la branche fonctionnelle proportionnelle (PR) que l'entrée de la branche fonctionnelle intégratrice (INT1) du régulateur de courant reçoivent la différence précitée ($I_0$–$I_d$) diminuée d'une valeur de marge de courant ($\Delta I$).

3. Procédé selon la revendication 1, caractérisé en ce que l'entrée de la branche proportionnelle (PR) reçoit la différence précitée ($I_0$–$I_d$), et l'entrée de la branche fonctionnelle intégratrice (INT1) du régulateur de courant reçoit la différence précitée ($I_0$–$I_d$) diminuée d'une valeur de marge de courant ($\Delta I$).

4. Procédé selon la revendication 2, caractérisé en ce que la valeur limite ($\alpha'_{max}$) pour la branche fonctionnelle intégratrice du régulateur de courant est calculée en calculant l'angle de commande auquel, pour un courant égal à l'ordre de courant, l'angle d'extinction du convertisseur à une valeur minimale prédéterminée, et en soustrayant ensuite de cet angle de commande une valeur qui correspond à la composante proportionnelle, pour un courant égal à l'ordre de courant.

5. Procédé selon la revendication 3, caractérisé en ce que la valeur limite ($\alpha'_{max}$) pour la branche fonctionnelle intégratrice du régulateur de courant est calculée en calculant l'angle de commande auquel, pour un courant égal à l'ordre de courant, l'angle d'extinction du convertisseur a une valeur minimale prédéterminée.

6. Procédé selon l'une quelconque des revendications précédentes, pour un ensemble de convertisseurs connectés en parallèle dans la station d'onduleur, chaque convertisseur ayant un signal d'ordre de courant différent (respectivement $I_{01}$ et $I_{02}$), caractérisé en ce que, dans chacun des convertisseurs ayant un signal d'ordre de courant inférieur à celui du convertisseur qui a le signal d'ordre

# EP 0 173 175 B1

de courant le plus élevé, la composante d'angle de commande correspondant à l'intégrale par rapport au temps de la différence précitée, est limitée sous la dépendance de la différence entre le signal d'ordre de courant le plus élevé et le signal d'ordre de courant du convertisseur, à une valeur qui correspond à l'angle de commande qui, lorsque le courant du convertisseur est égal à son ordre de courant, donne au convertisseur une tension qui est égale à la tension du convertisseur ayant l'ordre de courant le plus élevé, lorsque le courant de ce dernier convertisseur est égal à son ordre de courant.

7. Convertisseur statique dans un système de transport d'énergie à haute tension et à courant continu, comportant des moyens de commande pour mettre en oeuvre le procédé selon l'une quelconque des revendications précédentes, ce convertisseur comprenant:

ʻun régulateur de courant de type proportionnel-intégrateur,

des moyens pour commander l'angle de commande du convertisseur sous la dépendance de la différence ($I_0-I_d$) entre, d'une part, le signal d'ordre de courant ($I_0$) et, d'autre part, le courant continu mesuré,

des moyens pour donner une inclinaison positive à la caractéristique courant-tension du convertisseur, pendant le fonctionnement en onduleur dans une plage qui est déterminée par le signal d'ordre de courant ($I_0$) et le signal d'ordre de courant ($I_0$) diminué de la valeur de marge de courant ($\Delta I$), caractérisé en ce que

le régulateur de courant est divisé en deux branches ou parties fonctionnelles, à savoir une partie de régulation fonctionnelle proportionnelle (PR) et une partie de régulation fonctionnelle intégratrice (INT),

des moyens sont prévus pour limiter le signal de sortie ($\alpha_I$) de la partie fonctionnelle intégratrice,

des moyens de calcul (FAC) sont incorporés dans le but de calculer la valeur limite ($\alpha'_{max}$) de la grandeur de sortie de la partie de régulation fonctionnelle intégratrice (INT1) du régulateur de courant,

un dispositif de sommation (S2) est incorporé dans le but de faire la somme des grandeurs de sortie des parties de régulation fonctionnelles proportionnelle et intégratrice du régulateur de courant,

et le dispositif de sommation (S2) est connecté au circuit qui commande le convertisseur.

8. Convertisseur selon la revendication 7, caractérisé en ce que des moyens sont prévus pour appliquer la différence précitée ($I_0-I_d$) diminuée d'une valeur de marge de courant ($\Delta I$), au côté d'entrée de la branche fonctionnelle proportionnelle (PR) ainsi que de la branche fonctionnelle intégratrice (INT1) du régulateur de courant.

9. Convertisseur selon la revendication 7, caractérisé en ce que des moyens sont prévus pour appliquer la différence précitée ($I_0-I_d$), diminuée d'une valeur de marge de courant ($\Delta I$), au côté d'entrée de la branche fonctionnelle intégratrice (INT1) pour le régulateur de courant, et des moyens sont prévus pour appliquer la différence précitée ($I_0-I_d$), au côté d'entrée de la branche fonctionnelle proportionnelle (PR) du régulateur de courant.

10. Convertisseur selon la revendication 8, caractérisé en ce que des moyens sont prévus pour calculer l'angle de commande auquel, pour un courant égal à l'ordre de courant, l'angle d'extinction du convertisseur a une valeur minimale prédéterminée, en ce que des moyens sont prévus pour soustraire de l'angle de commande calculé une quantité qui correspond à la valeur de la composante proportionnelle, pour un courant égal à l'ordre de courant, et en ce que des moyens sont prévus pour limiter la quantité de sortie de la partie intégratrice du régulateur de courant, soit directement conformément à la valeur calculée précitée, soit après un traitement supplémentaire de cette valeur calculée.

9

FIG.1

FIG. 2

FIG. 3

FIG. 4